# FASCICULE DE BREVET EUROPEEN

(11) **EP 2 033 725 B1**
(45) Date de publication et mention de la délivrance du brevet: **02.11.2011**
(21) Numéro de dépôt: 07405274.7
(22) Date de dépôt: 10.09.2007
(51) Int. Cl.: B23B 3/10, B23Q 7/00

(54) **Dispositif d'alimentation et de déchargement automatique universel de pièces pour machine-outil**
Vorrichtung zum universellen automatischen Zuführen und Entladen von Werkstücken für Werkzeugmaschine
Universal automatic device for supplying and unloading parts for a machine tool

(43) Date de publication de la demande: 11.03.2009
(73) Titulaire: Samsys GmbH, 98544 Zella-Mehlis (DE)
(72) Inventeur: Geiser, Marc S., 98528 Goldlauter (DE)
(74) Mandataire: AMMANN PATENTANWÄLTE AG BERN

(56) Documents cités:
- EP-A- 0 900 612
- WO-A-92/12915
- AT-B- 402 616

## Description

La présente invention porte sur un dispositif d'alimentation automatique en pièces brutes ou semi-finies pour machine-outil, notamment pour tour CNC, et de déchargement automatique des pièces usinées selon le préambule de la revendication indépendante 1, ainsi que sur un procédé de mise en oeuvre de ce dispositif selon la revendication 6.

Outre les robots, dont la mise en oeuvre est en principe prévue pour des fabrications en très grandes séries sur des machines-outils à postes multiples (machines-transferts), on peut distinguer deux types de dispositifs automatiques d'alimentation (ou de chargement, selon une autre terminologie également courante) d'une machine-outil en pièces brutes ou semi-finies destinées à être usinées et/ou de déchargement des pièces venant d'être usinées, à savoir les portiques de chargement et les dispositifs connus sous le nom de ravitailleurs de barres.

Les ravitailleurs de barres, par exemple du genre de celui conçu par l'inventeur de la présente invention et décrit dans EP-0 900 612, sont agencés à l'arrière de la poupée fixe ou broche du tour. Existants sur le marché depuis une cinquantaine d'années, ils sont mis en oeuvre pour l'usinage de barres dont l'accès à l'espace d'usinage à l'avant de la broche est exclue, à raison de leurs longueurs (en moyenne, cet accès s'étend sur la plupart des tours CNC sur une longueur de l'ordre de 0.3 m à 0.6 m, tandis que les barres dites courtes mesurent entre 1 et 1.50 m environ). Ces ravitailleurs, s'ils permettent une automatisation de l'alimentation des tours en barres de ce type, sont toutefois affectés d'inconvénients non négligeables. Le premier, majeur, concerne les chutes matière. En effet, pour obtenir des pièces usinées de haute précision, tout flottement de la barre doit être empêché, ce qui implique la nécessité d'un guidage précis de la barre dans la broche du tour. Ce guidage est assuré par au moins un élément de réduction (tube ou douille) introduit dans la broche du tour et dont l'alésage correspond au diamètre matière, c'est-à-dire de la barre, mais il rend impossible la saisie de la chute matière, donc l'évacuation de cette dernière par l'arrière de la broche. Pour ces raisons, les chutes sont toujours éjectées par l'avant, dans la zone d'usinage du tour, dans le convoyeur de copeaux. Or, ces chutes peuvent aisément atteindre 5 kg, voire plus, et provoquer, en tombant, des dommages, non seulement sur ledit convoyeur mais aussi sur toutes parties situées sur la ligne de tombée. Ce grave inconvénient est amplifié quand on considère les tours modernes comportant au moins quatre axes, une tourelle d'outils pouvant se trouver directement en-dessous de l'aire d'usinage, donc sur la ligne de chute. On conçoit que l'utilisation d'un ravitailleur du genre évoqué s'avère donc délicate, voire pratiquement inconciliable avec un tour multi-tourelles. Le second inconvénient, de gravité peut être moindre, mais tout de même passablement gênant, réside dans le fait que les pièces usinées sont récupérées en vrac, et non placées automatiquement de façon contrôlée dans une position voulue dans une zone de stockage ou sur un banc de contrôle, contrôle qui s'avère indispensable notamment pour des pièces de haute précision.

Les portiques de chargement sont mis en oeuvre en vue de l'alimentation automatique en pièces brutes ou semi-finies autres que les barres venant d'être mentionnées à propos des ravitailleurs, c'est-à-dire en lopins (chucking /Futterteile), en arbres dont la longueur se situe dans la plupart des cas dans un intervalle de 250 mm à 500 mm et en pièces moulées, et du déchargement automatique de ces pièces après usinage. Apparus sur le marché depuis une vingtaine d'années, ils ne présentent certes pas les inconvénients observés à propos des ravitailleurs en barres, mais en revanche, ils ne permettent pas une alimentation automatique des tours ou autres centres d'usinage en barres par la broche. Et outre l'exclusion d'une automatisation de l'alimentation du tour en barres, il s'avère que même une alimentation manuelle en pièces de ce type (barres) peut s'avérer impossible, du fait que les portiques, ancrés à demeure au sol dans la quasi totalité des cas, empêchent tout accès par l'arrière de la broche.

C'est pourquoi, depuis des décennies, les fabricants de pièces, principalement des sous-traitants, se trouvent chaque fois, lors de l'acquisition d'un dispositif d'alimentation automatique, devant un problème dont la gravité va croissante au point de compromettre, à l'heure actuelle, le développement ou la croissance d'une entreprise. En effet, ces fabricants ignorent en général ce qu'ils auront à fabriquer dans le futur : continuité dans le genre d'usinages effectués jusque-là (par exemple usinage de barres) ou au contraire, à raison de nécessaires adaptations au marché (impliquant, par exemple, l'usinage de lopins et de pièces moulées, en substitution ou en complément à l'usinage de barres). En tout état de cause, ils doivent aujourd'hui être à même de s'adapter à court terme à toute éventualité, tandis que l'acquisition de l'un des deux types de dispositifs automatiques leur servira pour l'usinage, par exemple de lopins et de pièces moulées, mais les bloquera pour l'usinage de barres et vice versa, sauf à augmenter sensiblement l'investissement financier par acquisition de d'au moins un dispositif de chaque type. En outre, une double évolution du marché et des machines-outils impose une fréquence de mises en train qui va augmentant et exige des fabricants l'aptitude à effectuer des usinages de pièces de plus en plus complexes impliquant la mise en oeuvre de machines-outils polyvalentes pourvues de tourelles et d'axes d'usinage multiples.

Le but de la présente invention est de résoudre ce problème et de pallier concomitamment les inconvénients que présentent les deux types de dispositifs commentés plus haut
- ravitailleurs de barres et portiques de chargement/déchargement - la solution étant fournie grâce aux moyens définis dans la partie caractérisante de la revendication indépendante 1, les revendications dépendantes permettant une exploitation à bon compte de l'invention.

Lesdits moyens font du dispositif de chargement /déchargement proposé un outil de flexibilité optimale, véritablement universel, en permettant:
- une alimentation automatique en lopins, arbres et pièces moulées, à travers l'espace d'usinage, c'est-à-dire par introduction de ces pièces par l'avant, dans les mandrins ou les pinces de serrage des machines-outils,
- une alimentation automatique en barres, par l'arrière et à travers la broche desdites machines-outils,
- un déchargement contrôlé de toutes ces pièces après usinage (stockage ou emmagasinage et éventuel contrôle des tolérances des cotes d'usinage),
- une récupération des chutes matière (portions terminales des barres) hors de la zone d'usinage du tour, lorsque ce dernier est mis en oeuvre pour l'usinage de barres,
- une transition possible et réduite à un minimum de temps pour passer du traitement de pièces d'un genre donné (par exemple des pièces moulées) au traitement de pièces d'un autre genre (par exemple des barres),
- la possibilité d'exécuter simultanément, lorsqu'un tour double-broche est mis en oeuvre, l'usinage d'une barre serrée dans le mandrin de gauche, barre qui aura été alimentée par l'arrière à travers la broche de gauche, et l'usinage d'une autre pièce (lopin, arbre ou pièce moulée) serrée dans le mandrin de droite, qui aura été alimentée par l'avant, à travers l'espace d'usinage,
   le tout à coûts minima.
   Un exemple de réalisation du dispositif de chargement/déchargement selon l'invention va maintenant être décrit à l'aide des dessins annexés, dans lesquels
   la figure 1A est une vue en perspective, schématique, du dispositif,
   la figure 1B est une vue semblable à la figure 1A, où des éléments ont été écartés,

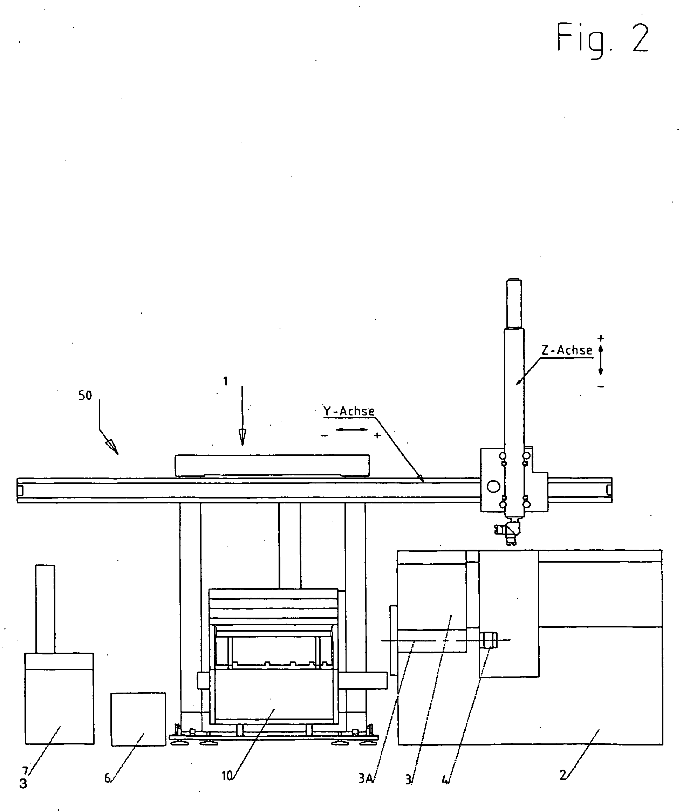

   la figure 2 est une vue de face du dispositif, selon la flèche F à la figure 1A,
   la figure 3 est une vue arrière du dispositif, selon la flèche R à la figure 1A,
   la figure 4 est un schéma représentant le transport d'une barre à usiner depuis un plan incliné d'un ravitailleur de barres vers le centre de la broche,
   les figures 5 et 6 montrent des détails de la figure 4,
   la figure 7 montre une tête polyvalente de chargement et de déchargement de pièce,
   les figures 8 et 9 montrent la saisie, dans l'espace d'usinage, d'une pièce usinée à partir d'une barre,
   la figure 10 montre la tête de chargement/déchargement en position au-dessus d'une pièce à saisir destinée à être usinée ou d'une pièce venant d'être placée, et
   les figures 11, 12 et 13 montrent le processus de récupération d'une chute matière après usinage d'une barre, étant observé que les échelles de représentation ne sont pas uniformes.

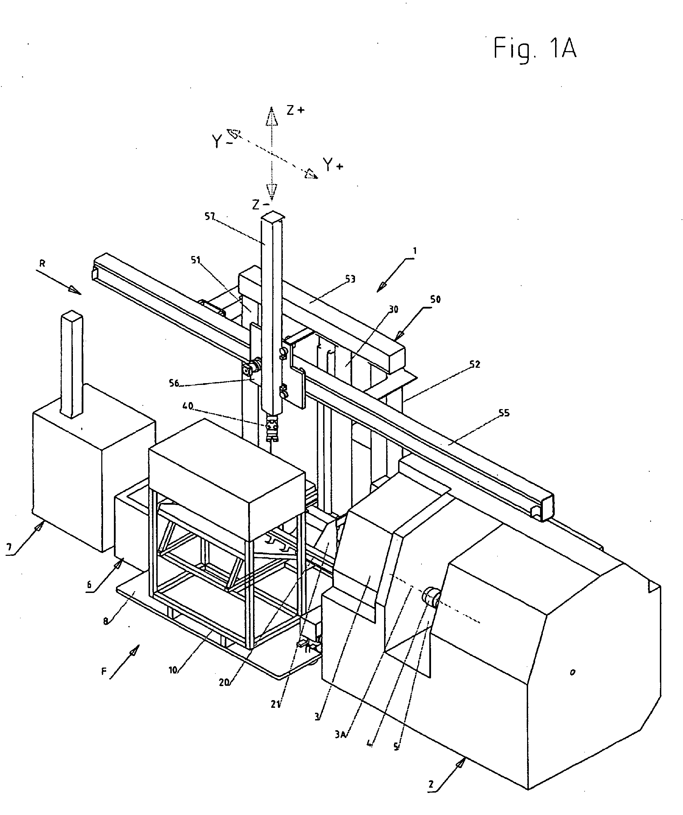

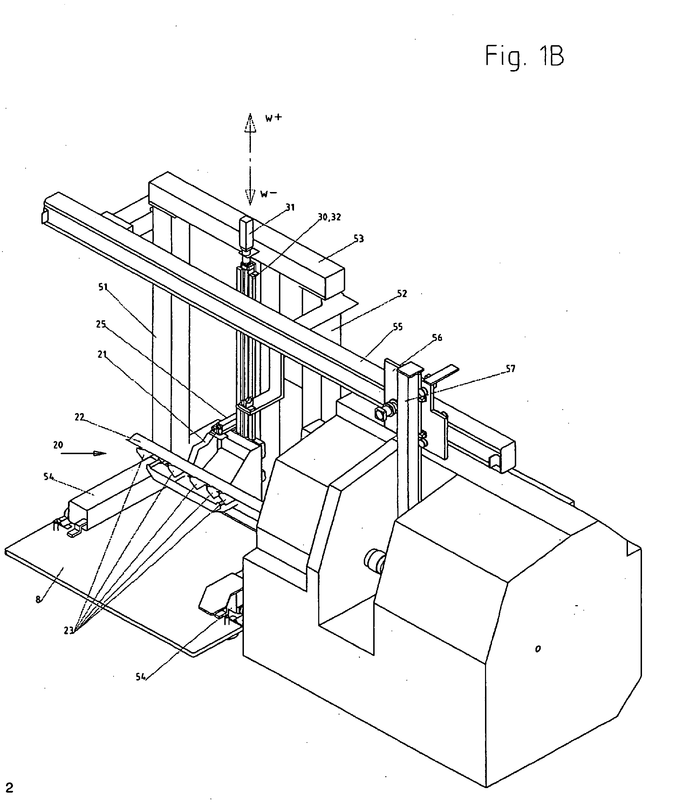

Le dispositif de chargement/déchargement automatique 1 de pièces, ci-après le dispositif universel, est présenté à l'appui des schémas des figures 1A, 1B (vues en perspective), 2 et 3 (vues de face et arrière respectivement, selon les flèches F et R à la figure 1A). Il est disposé essentiellement à l'arrière d'un centre d'usinage, en l'occurrence un tour 2 dont on aperçoit l'espace d'usinage 5 et, dans celui-ci, un mandrin 4 dans le prolongement d'une poupée fixe ou broche 3 d'axe 3A.

Le dispositif universel 1 comprend un portique de chargement/déchargement automatique 50 intégrant un dispositif d'alimentation de barres 20 ainsi qu'un magasin amovible 10 spécifique ou polyvalent, donc prévu pour pièces de différents genres, brutes ou semi-finies à usiner et/ou pièces usinées. Selon l'exemple, le magasin 10 est du type polyvalent, en ce qu'il peut contenir, d'une part, des barres et, d'autre part, d'autres pièces telles que lopins et/ou pièces moulées et/ou arbres. Le dispositif universel 1 comprend en outre des éléments auxiliaires, c'est-à-dire un bac de récupération 6 pour chutes et rébuts et un bloc de contrôles et mesures 7.

Le portique 50 présente un bâti fait de deux poutrelles verticales 51, 52 dont les extrémités supérieures sont reliées par une poutrelle horizontale 53 pour former un U renversé, chacune de ces poutrelles verticales reposant sur un socle constitué d'une poutre 54 orientée orthogonalement à ladite poutrelle horizontale. Ce bâti porte, d'une part, à sa partie supérieure, une poutre de guidage 55 le long de laquelle peut se déplacer un chariot 56 selon un axe Y (sens Y+, Y-), chariot auquel est reliée une poutrelle 57 ayant une aptitude au déplacement vertical selon un axe Z (sens Z+, Z-) et à l'extrémité inférieure de laquelle est fixée une tête polyvalente 40. D'autre part, à la poutrelle horizontale 53 du bâti, entre les poutrelles verticales du U renversé, est fixée une poutrelle de guidage 30 aux parties supérieure et inférieure de laquelle sont agencés un moteur 31 et un chariot 21 respectivement, lesquels sont reliés entre eux par un moyen de transmission de mouvement 32 abrité par la poutrelle 30, selon l'exemple une vis actionnée par ledit moteur 31, de sorte à assurer audit chariot 21 une aptitude au déplacement vertical, selon un axe W (sens W+, W-), sur une distance donnée. Selon une variante, la poutrelle 30 peut être supprimée, tous les éléments précités qui lui sont reliés pouvant l'être à l'une ou l'autre des poutrelles 51, 52. Selon une variante, le portique peut être conçu de sorte que la poutrelle 55, et avec elle la poutrelle 57, aient une apatitude à un mouvement supplémentaire, c'est-à-dire selon un axe (non représenté) horizontal et orthogonal aux axes Y et Z.

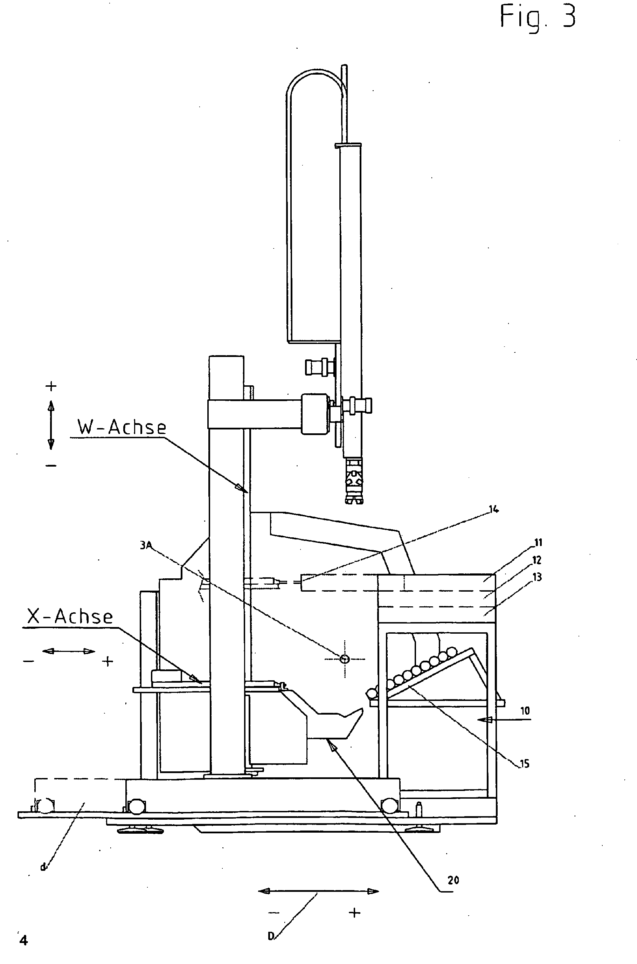

Le bâti, et avec lui les éléments qu'il porte, est de préférence déplaçable latéralement sur une plate-forme 8, c'est-à-dire orthogonalement par rapport à l'axe 3A de la broche du tour, cela sur une distance limitée déterminée d (flèches D+, D- à la figure 3).

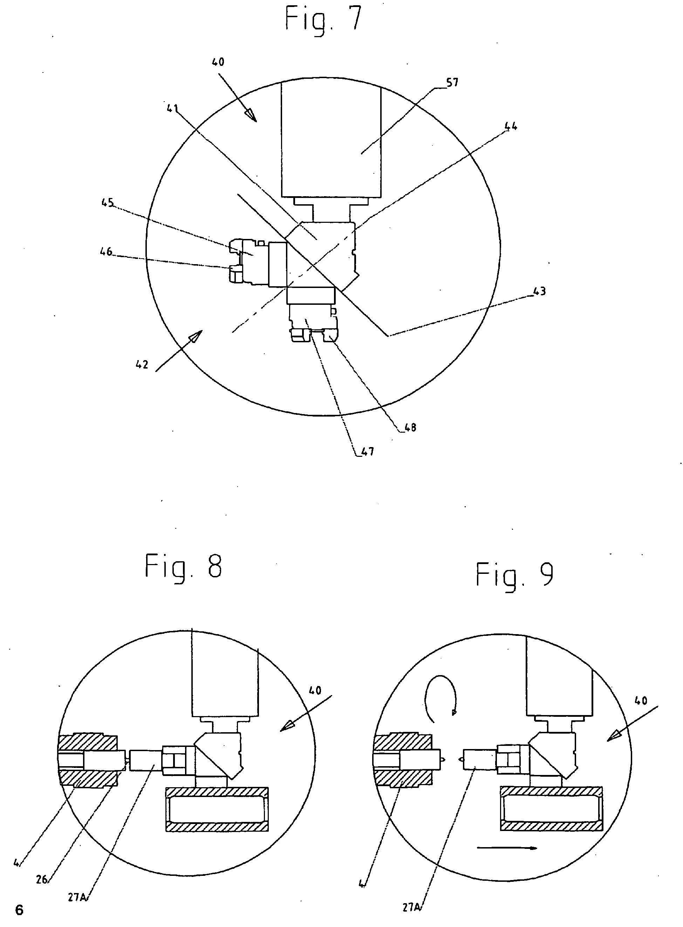

Un exemple de tête polyvalente 40 agencée à la partie terminale inférieure de la poutrelle 57 est représenté à la figure 7. Cette tête comprend une base 41 et une tourelle 42. Cette tourelle est assise sur ladite base selon un plan incliné 43 à 45° avec un pouvoir de glissement autour d'un axe 44. La tourelle 42 comporte deux mandrins 45, 47, présentant des mors 46, 48 respectivement. Ainsi, en imprimant une rotation de 180° à la tourelle à partir de la position représentée à la figure 7, le mandrin 45 qui était positionné horizontalement vient adopter la position verticale de l'autre mandrin 47 et vice-versa. Bien entendu, d'autres types de têtes et tourelles, plus spécifiquement adaptés à un genre donné de pièces (par exemple à double mandrin pour le chargement/déchargement d'arbres) peuvent être réalisés par l'homme du métier.

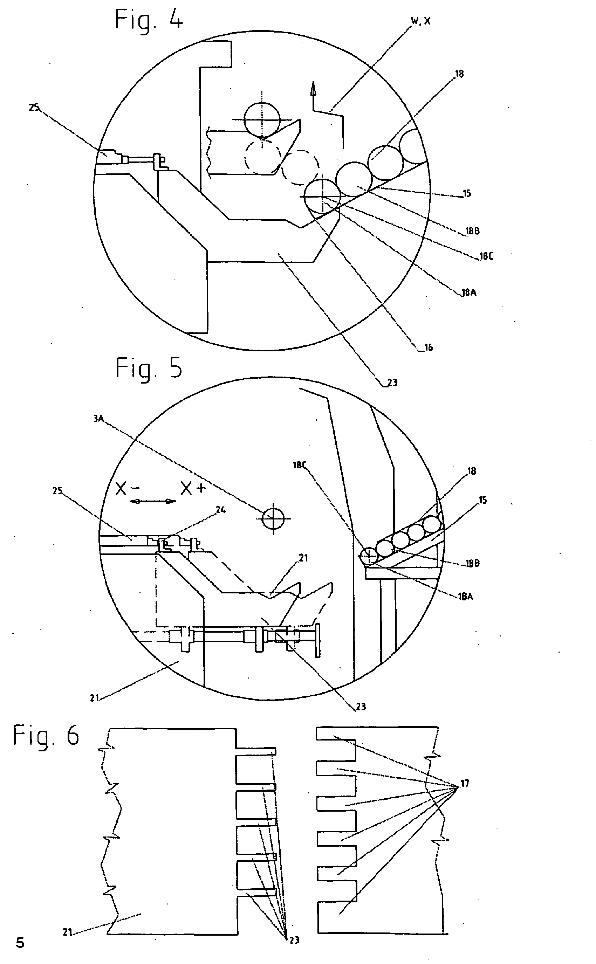

En regard du chariot 21 est disposé le magasin de pièces à usiner /usinées 10. Comme indiqué plus haut, le magasin représenté est de type polyvalent comportant à sa partie supérieure une série de tiroirs 11, 12, 13 dans lesquels peuvent trouver place des pièces (lopins, arbres et/ou des pièces moulées brut(e)s ou semi-fini(e)s et/ou lopins, arbres et/ou des pièces moulées usinées et pièces usinées à partir de barres). Chacun des tiroirs est pourvu d'une une équerre d'entraînement 14. A sa partie inférieure, c'est-à-dire sous les tiroirs précités, se trouve au moins une table à plan incliné 15 (cf. figures 3, 4 et 5) sur laquelle repose une série de barres 18 à usiner, la première 18A de celles-ci étant retenue par un rebord 16 (ou, selon une variante non représentée, par des taquets escamotables), ce rebord présentant des entailles 17 mordant dans le plan de la table (cf. figure 6).

Un dispositif d'alimentation du tour en barres brutes ou semi-finies 20, c'est-à-dire essentiellement un ensemble {banc en forme de V - poussoir}, analogue dans sa structure et son fonctionnement au dispositif, couramment appelé ravitailleur de barres, qui est décrit en détail dans EP-0 900 612 évoqué en introduction, représenté ici symboliquement par le banc 22 en forme de V, à la figure 1B où le magasin 10 est écarté, est relié au chariot 21. Des griffes 23 s'étendent sous le banc V dont elles sont solidaires, ces griffes étant disposées en regard des entailles 17 de la table inclinée pour leur laisser le passage par le dessous. Comme évoqué plus haut, le chariot 21 et par conséquent l'ensemble {chariot 21 - banc 22} a une aptitude au déplacement vertical le long de l'axe W, sous l'action du moteur 31 tandis que l'ensemble {banc 22 - griffes 23} a en plus une aptitude au déplacement horizontal selon un axe X (sens X+, X-), sous l'action d'un moteur 25 pouvant se mettre en prise avec le banc 22 par l'intermédiaire d'une équerre d'entraînement 24 (figures 1B, 3-5).

Un cycle d'usinage d'une pièce à partir d'une barre se déroule comme suit.

Une première phase (cf. figures 4 et 5) consiste à faire passer de la table 15 sur le banc 22 la première barre 18A, c'est-à-dire celle qui est bloquée contre le rebord 16 et de positionner celle-ci de sorte que son axe 18C se confonde avec l'axe 3A (figures 3 et 5) de la broche 3. Ce transfert est effectué par une mise en oeuvre appropriée des mouvements selon les axes W (chariot et ensemble banc et griffes) et X (ensemble banc et griffes seulement), comme cela est schématisé à la figure 4, tandis que la barre 18B se mettra en attente, bloquée contre le rebord 16.

Une deuxième phase consiste à introduire la barre dans la broche au moyen du poussoir (non représenté), selon un processus connu et décrit en détail dans EP-0 900 612 déjà évoqué, jusqu'à ce qu'elle ait atteint sa position programmée hors du mandrin 4 en vue de l'usinage d'une première pièce à partir de ladite barre 18A puis à procéder aux opérations d'usinage, lesquelles démarreront après blocage de ladite barre dans le mandrin 4.

L'usinage accompli, une troisième phase consiste à séparer la pièce usinée de la barre restante par application de l'un des processus connus et couramment appliqués, par exemple par tronçonnage et torsion, et à emmagasiner ladite pièce, dans le magasin 10, le cas échéant après passage sur le banc de contrôles et mesures 7.

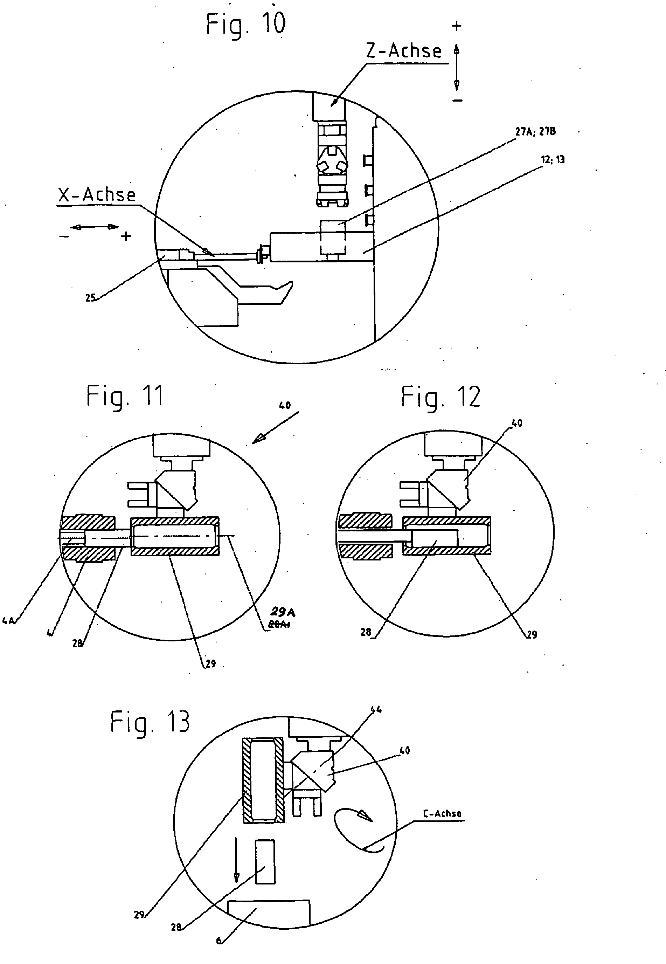

Selon la figure 8, après tronçonnage jusqu'à un filet de matière près (référence 26), la prise de la pièce usinée dans un mandrin de la tourelle 42 de la tête polyvalente 40, après positionnement adéquat de cette dernière, est suivie d'une rotation du mandrin 4 du tour pour provoquer la rupture du filet et entraîner la libération de la pièce usinée 27A. Après quoi, cette dernière peut être transportée par la mise en oeuvre des mouvements adéquats selon les axes Y et Z - vers le magasin 10 pour y être emmagasinée , de manière ordonnée, directement ou indirectement, c'est-à-dire après passage sur le banc de contrôles et mesures, sauf à constater un défaut (par exemple non-observation d'une tolérance d'une cote), auquel cas la pièce usinée sera versée dans la caisse de récupération (voir figure 10, où l'on admet que la pièce usinée 27A est rangée dans une alvéole (non référencée) d'un tiroir 12).

Les figures 11, 12 et 13 montrent le déroulement des opérations de récupération d'une chute matière 28 (ou chute de barre) qui se trouve dans le mandrin 4 du tour après que la barre ait été complètement usinée. A cette fin, la tête 40, dont l'un des mandrins est équipé d'un tube de récupération 29 dont le diamètre est sensiblement supérieur au diamètre de la barre, est positionnée en regard de ladite chute, de telle sorte que l'axe 29A coïncide au moins approximativement avec l'axe 4A du mandrin 4. Puis la chute est extraite du mandrin 4 sous l'action du poussoir (non référencé) (figure 12). Ce dernier est retiré et mis en position pour l'amenage dans la broche d'une nouvelle barre, tandis que le tube 29 est transporté (par mise en oeuvre des mouvements selon les axes Y et Z), au-dessus du bac de récupération 6, dans lequel elle est versée, suite à l'application de la rotation de la tourelle autour de son axe 44 (cf. supra et figure 13).

L'alimentation du tour en pièces autres que les barres (lopins, arbres, pièces moulées) et le déchargement de celles-ci après la fin des opérations d'usinages se déroulent selon un processus connu :
Les pièces à usiner sont stockées de manière ordonnée, par exemple dans les alvéoles de section adéquate (non représentées) que présentent les tiroirs (on en aperçoit trois à la figure 3 et quatre à la figure 10, à titre d'exemples) du magasin 10 positionné de manière déterminée face au bâti du portique. En se référant à la figure 10, ou l'on admet maintenant qu'un tiroir 13 (considéré auparavant comme tiroir 12) contient des pièces à usiner 27B, on voit que la tête 40 est en position pour saisir l'une définie de ces dernières aux fins de la transposer dans l'espace d'usinage 5 et de l'introduire dans le mandrin 4 du tour. Aussitôt le blocage de celui-ci effectué et le bras de chargement et déchargement dégagé hors de l'aire d'usinage., la pièce 27B est usinée. Lorsque les opérations d'usinage sont terminées, un transport inverse intervient, à l'instar de ce qui a été exposé plus haut à ce propos. Là également, préalablement à l'emmagasinage, la pièce usinée peut passer sur le banc de contrôles et mesures.
Bien entendu, d'autres phases peuvent être exécutées, par exemple un retournement d'une pièce en vue d'un deuxième cycle d'usinage (face arrière non usinée par exemple) par la mise en oeuvre de dispositifs optionnels non représentés.
De manière générale, toutes les opérations décrites plus haut sont avantageusement commandées numériquement.

### Liste des références:

- 01: référence générale du dispositif universel
- 02: centre d'usinage / tour CNC
- 03: broche / poupée fixe
- 03A: axe mandrin/broche
- 04: mandrin
- 05: espace d'usinage
- 06: bac de récupération de chutes matière
- 07: bloc de contrôles et de mesures
- 08: plate-forme du bâti
- 09: --
- 10: magasin pièces brutes ou semi-finies et/ou usinées
- 11: tiroir de pièces
- 12: id.
- 13: id.
- 14: équerre d'entraînement
- 15: table / plan incliné
- 16: rebord inférieur de la table 15
- 17: entailles dans le rebord 16 mordant sur le plan de la table
- 18: barres
- 18A: première barre
- 18B: deuxième barre
- 19: --
- 20: dispositif d'alimentation barres / ravitailleur barres
- 21: chariot
- 22: banc
- 23: griffes
- 24: équerre d'entraînement
- 25: moteur d'entraînement (sens X+, X-)
- 26: filet matière (tronçonnage)
- 27A: pièce usinée
- 27B: pièce à usiner (lopin)
- 28: chute
- 29: tube de récupération
- 29A: Axe du tube de récupération
- 30: poutrelle de guidage (W+, W-)
- 31: moteur (entraînement selon W)
- 32: vis
- 33 -: 39 : --
- 40: tête polyvalente (chargement / déchargement)
- 41: Base
- 42: tourelle
- 43: plan de glissement commun incliné
- 44: axe de rotation (incliné à 45°)
- 45: mandrin
- 46: mors du mandrin 44
- 47: mandrin
- 48: mors du mandrin 47
- 49: --
- 50: portique
- 51: poutrelle verticale
- 52: id
- 53: poutrelle horizontale supérieure du U renversé
- 54: poutre-socle
- 55: poutre de guidage horizontale supérieure (Y)
- 56: chariot sur poutre 55 (déplact. Y)
- 57: poutrelle de déplacement Z
- 58: --
- 59: --

## Revendications

1. Dispositif d'alimentation automatique en pièces brutes ou semi-finies pour machine-outil (2), notamment pour tour CNC, et de déchargement automatique des pièces usinées, présentant
- un bâti (50) portant un dispositif de chargement /déchargement des pièces apte à se mouvoir au moins selon un axe vertical Z et un axe horizontal Y, successivement ou simultanément, pour introduire une pièce à usiner dans un espace d'usinage (5) du tour (2) et extraire de cet espace la pièce après usinage,
- un magasin de pièces (10) et
- un bac de récupération de chutes ou rébuts (6),
**caractérisé en ce qu'**il intègre un dispositif ravitailleur (20) permettant le chargement de barres (18) par l'arrière de la broche du tour (3) d'axe (3A), le magasin (10) permettant de recevoir au moins une barre à usiner, que ledit ravitailleur (20), lequel comprend un chariot (21) dont est solidaire un banc (22) pour la réception desdites barres (18) a une aptitude au déplacement vertical selon un axe W sous l'action d'un moyen moteur (31) et une aptitude à un déplacement horizontal autonome selon un axe X sous l'action d'un organe moteur (25), le banc (22) étant pourvu d'un moyen de liaison (24) pouvant coopérer avec le moyen moteur (31), de sorte à permettre une automatisation de chargement et de déchargement de toute pièce brute ou de barre ainsi qu'une récupération contrôlée de toute pièce usinée et de toute chute matière.

2. Dispositif d'alimentation automatique selon la revendication 1, **caractérisé en ce que** le banc (22) présente une forme en V et est solidaire de griffes (23).

3. Dispositif d'alimentation automatique selon la revendication 2, **caractérisé en ce que** la ou les barres à usiner (18) sont disposées sur une table inclinée (15) du magasin (10), la table présentant à sa partie terminale des entailles (17) pour laisser le passage aux griffes (23), de sorte à permettre la transposition d'une barre sur le banc (22).

4. Dispositif d'alimentation automatique selon l'une quelconque des revendications 1 à 3, **caractérisé en ce que** la barre à usiner est positionnée dans l'axe (3A) de la broche du tour par mise en oeuvre des mouvements selon les axes X et W.

5. Dispositif d'alimentation automatique selon l'une quelconque des revendications 1 à 4, **caractérisé en ce que** le magasin comporte au moins un tiroir (11; 12; 13) pour le stockage de pièces à usiner et/ou usinées, chaque tiroir étant pourvu d'un moyen de liaison (14) pouvant coopérer avec le moyen moteur (25) pour l'ouverture et la fermeture du tiroir.

6. Procédé de mise en oeuvre du dispositif selon l'une quelconque des revendications 1 à 5, **caractérisé en ce que** la poutrelle de chargement/déchargement est actionnée à chaque fin d'usinage d'une barre aux fins de récupération de la chute matière, dans l'espace d'usinage, et de transport de celle-ci dans le bac de récupération et de chutes matière et rébut.

## Claims

1. Device for automatically feeding blanks or half-finished workpieces to a machine tool (2), more particularly a CNC lathe, and automatically unloading the machined workpieces, including
- a frame (50) supporting a workpiece loading / unloading device that is capable of successively or simultaneously moving at least in a vertical Z axis and a horizontal Y axis in order to introduce a workpiece that is to be machined into a machining area (5) of the lathe (2) and to extract the workpiece from this space after machining,
- a workpiece magazine (10), and
- a recovery bin for residual material or rejects (6),
**characterized in that** it comprises an integrated feeder device (20) that allows loading bars (18) through the rear into the spindle of the lathe (3) of axis (3A), the magazine (10) allowing to receive at least one bar to be machined, that the feeder (20), which comprises a carriage (21) having a bench (22) for receiving the bars (18) connected thereto, is vertically displaceable in a W axis under the action of a motor means (31) and horizontally displaceable autonomously in an X axis under the action of a motor means (25), the bench (22) being provided with a connecting means (24) that is able to cooperate with the motor means (31) so as to allow an automated loading and unloading of any blank or bar and a controlled recovery of any machined workpiece and of any residual material.

2. Automatic feeding device according to claim 1, **characterized in that** the bench (22) is V-shaped and has claws (23) connected thereto.

3. Automatic feeding device according to claim 2, **characterized in that** the bar(s) to be machined (18) is/are disposed on an inclined table (15) of the magazine (10), the table having slots (17) in its end portion to allow the passage of the claws (23) so as to permit the transfer of a bar onto the bench (22).

4. Automatic feeding device according to any one of claims 1 or 3, **characterized in that** the bar to be machined is positioned in the axis (3A) of the spindle of the lathe by performing movements in the X and W axes.

5. Automatic feeding device according to any one of claims 1 or 4, **characterized in that** the magazine comprises at least one drawer (11; 12; 13) for the storage of workpieces that are to be machined and/or machined workpieces, each drawer being provided with a connecting means (14) that is capable of cooperating with the motor means (25) for opening and closing the drawer.

6. Method for the operation of the device according to any one of claims 1 to 5, **characterized in that** the loading/unloading beam is actuated every time a bar has been completely machined in order to recover the residual material in the machining area and to transfer it to the recovery bin for residual material and rejects.

## Patentansprüche

1. Vorrichtung zum automatischen Zuführen von Rohlingen oder halbfertigen Werkstücken zu einer Werkzeugmaschine (2), insbesondere einer CNC-Drehmaschine, und zum automatischen Entladen der bearbeiteten Werkstücke, mit
- einem Gestell (50), das eine nacheinander oder gleichzeitig in mindestens einer senkrechten Z- und einer waagrechten Y-Achse bewegliche Werkstücklade-/entladevorrichtung trägt, um ein Werkstück in einen Bearbeitungsraum (5) der Drehmaschine (2) einzuführen und das Werkstück nach der Bearbeitung aus diesem Raum zu entnehmen,
- einem Werkstückmagazin (10) und
- einem Sammelbehälter (6) für Reststücke oder Ausschuss,
**dadurch gekennzeichnet, dass** sie einen integrierten Stangenlader (20) zum Laden von Stangen (18) von hinten durch die Spindel der Drehmaschine (3) mit der Achse (3A) aufweist, wobei das Magazin (10) mindestens eine zu bearbeitende Stange aufzunehmen gestattet, dass der Stangenlader (20), der einen Schlitten (21) und ein damit verbundenes Bett (22) zur Aufnahme der Stangen (18) aufweist, unter der Wirkung eines Antriebsmittels (31) senkrecht in einer W-Achse beweglich und unter der Wirkung eines Antriebsorgans (25) unabhängig davon waagrecht in einer X-Achse beweglich ist, wobei das Bett (22) ein Verbindungsmittel (24) aufweist, das mit dem Antriebsmittel (31) zusammenwirkt, wodurch die Automatisierung des Ladens und Entladens jeglicher Rohlinge oder Stangen ermöglicht wird sowie eine kontrollierte Entnahme jeglicher bearbeiteter Werkstücke und jeglicher Reststücke.

2. Automatische Zuführungsvorrichtung nach Anspruch 1, **dadurch gekennzeichnet, dass** das Bett (22) V-förmig ist und Klauen (23) damit verbunden sind.

3. Automatische Zuführungsvorrichtung nach Anspruch 2, **dadurch gekennzeichnet, dass** die zu bearbeitende(n) Stange(n) (18) auf einem geneigten Tisch (15) des Magazins (10) angeordnet sind, wobei der Tisch an der Endpartie Einschnitte (17) für den Durchtritt der Klauen (23) aufweist, um die Umsetzung einer Stange auf das Bett (22) zu ermöglichen.

4. Automatische Zuführungsvorrichtung nach einem der Ansprüche 1 bis 3, **dadurch gekennzeichnet, dass** die zu bearbeitende Stange durch Ausführen von Bewegungen in der X-und W-Achse in der Achse (3A) der Spindel positioniert wird.

5. Automatische Zuführungsvorrichtung nach einem der Ansprüche 1 bis 4, **dadurch gekennzeichnet, dass** das Magazin mindestens ein Schubfach (11; 12; 13) zum Lagern von zu bearbeitenden und/oder bearbeiteten Werkstücken aufweist, wobei die Schubfächer jeweils über ein Verbindungsmittel (14) verfügen, das mit dem Antriebsmittel (25) zum Öffnen und Schliessen des Schubfachs zusammenwirkt.

6. Verfahren zum Betrieb der automatischen Zuführungsvorrichtung nach einem der Ansprüche 1 bis 5, **dadurch gekennzeichnet, dass** der Lade-/Entladebalken jeweils am Ende der Bearbeitung einer Stange betätigt wird, um die Reststücke im Bearbeitungsraum zu entnehmen und sie in den Sammelbehälter für Reststücke und Ausschuss zu transportieren.
